# FASCICULE DE BREVET EUROPEEN

(11) **EP 2 870 817 B1**
(45) Date de publication et mention de la délivrance du brevet: **17.02.2021**
(21) Numéro de dépôt: 13744708.2
(22) Date de dépôt: 05.07.2013
(51) Int. Cl.: H04W 76/10, H04W 12/06, H04W 8/18, H04W 88/16, H04W 48/02

(54) **PROCEDE DE TRAITEMENT D'UNE REQUÊTE DE CONNEXION A UN RESEAU D'ACCES SANS FIL**
VERFAHREN ZUR VERARBEITUNG EINER ANFORDERUNG ZUM ANSCHLUSS AN EIN DRAHTLOSES ZUGANGSNETZWERK
METHOD OF PROCESSING A REQUEST FOR CONNECTION TO A WIRELESS ACCESS NETWORK

(30) Priorité: 05.07.2012 FR 1256466
(43) Date de publication de la demande: 13.05.2015
(73) Titulaire: ORANGE, 75015 Paris (FR)
(72) Inventeur: BONNAMY, Jean-Michel, F-22300 Ploubezre (FR); THILY, Erick, F-22730 Tregastel (FR); NEYRET, Nicolas, F-22300 Lannion (FR)
(86) Numéro de dépôt international: PCT/FR2013/051617
(87) Numéro de publication internationale: WO 2014/006350

(56) Documents cités:
- WO-A1-2004/095803
- WO-A1-2011/124853
- CN-A- 102 404 861
- US-A1- 2004 100 973
- US-A1- 2006 133 317
- US-B1- 7 477 632

## Description

### 1. Domaine de l'invention

L'invention se situe dans le domaine des télécommunications, et plus particulièrement dans le domaine des réseaux locaux tels que les réseaux de type LAN (*Local Access Network*)*.*

### 2. Etat de la technique antérieure

Afin d'offrir un accès au réseau Internet le plus large possible, il est connu d'utiliser les passerelles domestiques ou les passerelles d'entreprise comme points d'accès à un réseau d'accès sans fil tel que par exemple un réseau Wi-Fi. Wi-Fi est une marque désignant un produit compatible avec une norme de la famille de normes IEEE 802.11. IEEE (*Institute of Electricaland Electronics Engineers*) désigne l'Institut des ingénieurs électriciens et électroniciens. Dans la suite, on désigne par passerelle l'une ou l'autre de ces passerelles.

Pour cela, une passerelle gère un premier réseau d'accès sans fil à accès contrôlé par l'administrateur de la passerelle et réservé, par exemple, à l'usage des occupants du bâtiment dans lequel se trouve la passerelle, aussi appelé réseau local ou LAN, et un deuxième réseau d'accès sans fil prévu pour un usage public et/ou communautaire dont l'accès peut être limité ou pas. Chacun de ces réseaux d'accès sans fil est associé à un identifiant de réseau SSID (*Service Set Identifier,* identifiant d'ensemble de services) tel que défini dans le document normatif IEEE 802.11. Pour un opérateur en télécommunications donné, tous les réseaux d'accès sans fil prévu pour un usage public et/ou communautaire ont le même identifiant de réseau SSID.

Lorsqu'un terminal, tel que par exemple un "smartphone", s'est dernièrement connecté au réseau d'accès sans fil prévu pour un usage public, identifié par son SSID dit public, le terminal peut s'attacher automatiquement à ce réseau d'accès sans fil prévu pour un usage public lorsqu'il se trouve de nouveau dans la zone de couverture du réseau local desservi par la passerelle.

Une fois le terminal attaché à ce réseau d'accès sans fil au travers du SSID public, il bénéficie d'un niveau de qualité de service, ou QoS (*Quality of Service*)*,* moindre que celui offert par le même réseau au travers d'un SSID unique à la passerelle, dit SSID "privé". Les différences portent entre autres sur la bande passante allouée, sur le niveau de priorité accordée, et sur la sécurité. Notamment, le canal radio du SSID privé est encrypté, alors qu'il ne l'est pas pour le SSID public.

Dans le but de remédier à ces inconvénients, certains opérateurs ont déployé des passerelles selon la norme 802.11i WPA2-Enterprise (*Wi-Fi Protected Access 2,* accès protégé Wi-Fi 2 pour entreprise), qui est une variante de 802.11 apportant plus de sécurité, notamment un cryptage systématique du canal radio. D'autres avantages importants existent, comme l'attribution d'une adresse IP au terminal après son authentification plutôt qu'avant, ce qui a poussé certains de ces opérateurs, pour des raisons d'économie et de simplicité, à limiter au seul SSID public l'accès disponible sur de telles passerelles, et à ne plus offrir de SSID privé.

De l'art antérieur est connu par exemple le document US7477632 B1 qui décrit notamment la gestion des utilisateurs et différents profiles de service d'accès à un réseau de communication sans fil, en utilisant un premier identifiant SSID, associé à un fournisseur de service de connexion audit réseau, ainsi qu'un second identifiant de groupe auquel appartient un terminal sans fil requérant une connexion.

Le document CN102404861 A décrit une méthode permettant à un point d'accès WiFi de déterminer des paramètres de QoS et un APN en fonction de l'identifiant d'un terminal requérant une connexion.

Dans le document WO 2004/095803 A1, la partie requérant la connexion est authentifiée une fois pour toute, et le type d'accès dépend de cette authentification unique et peut être de type "local user" ou de type "guest".

Un inconvénient du SSID unique selon la norme 802.11i WPA2-Enterprise est qu'un terminal ne peut plus se connecter à la passerelle avec le niveau de QoS supérieur qui est associé à la passerelle, même si c'est un terminal que l'administrateur de la passerelle souhaite autoriser.

Un des buts de l'invention est de remédier à cet inconvénient de l'état de l'art.

### 3. Exposé de l'invention

A cette fin, l'invention propose un procédé de traitement d'une requête de connexion d'un terminal sans fil à un premier réseau par une passerelle offrant un accès audit premier réseau selon au moins un premier et un deuxième types d'accès, selon la revendication 1.

La passerelle est par exemple une passerelle domestique ou d'entreprise, comprenant un point d'accès Wi-Fi.

Le premier réseau est par exemple un réseau public tel que l'Internet. Le terminal sans fil est par exemple un "smartphone" ou un "laptop" apte à se connecter par Wi-Fi au point d'accès de la passerelle.

Grâce à l'invention, le terminal peut obtenir un accès au réseau public selon un type d'accès qui dépend du terminal, avec des caractéristiques de QoS associée à ce type d'accès, sur la base d'une seule et même requête de connexion.

Selon la technique antérieure, au contraire, le type d'accès attribué au terminal, et les caractéristiques de QoS associées à ce type d'accès, ne dépendent pas du terminal, mais de l'identifiant de la passerelle utilisé par le terminal dans sa requête de connexion. Pour obtenir un deuxième type d'accès différent d'un premier type d'accès obtenu suite à une première requête, il faut en effet, selon la technique antérieure, une deuxième requête différente de la première, comprenant un identifiant de passerelle différent de celui compris dans la première requête.

Selon un aspect de l'invention, le procédé de traitement d'une requête de connexion comprend une étape d'obtention d'une information représentative d'un droit au deuxième type d'accès.

Il peut exister une information relative à un droit d'accès privilégié à la passerelle attribuable au terminal. Si la requête de connexion ne comprend pas toutes les informations nécessaires au procédé pour déterminer l'existence d'un tel droit d'accès, le procédé obtient cette information et permet ainsi au terminal de profiter d'un accès au réseau public avec le niveau de QoS élevé qui est associé à un accès privilégié à la passerelle. Ce niveau de QoS dépend, entre autres, du type de contrat liant le gestionnaire de la passerelle et son fournisseur d'accès Internet.

Selon un aspect de l'invention, l'information représentative d'un droit au deuxième type d'accès est obtenue par consultation d'une liste d'identifiants de terminaux privilégiés.

Le critère utilisé par la passerelle pour déterminer si le terminal est autorisé à se connecter au premier réseau avec un droit d'accès privilégié peut être un critère de présence de ce terminal dans une liste de terminaux privilégiés qui ont été préalablement associés à cette passerelle particulière. Avantageusement, le terminal peut obtenir un droit d'accès privilégié grâce à la consultation par la passerelle d'une liste d'identifiants de terminaux privilégiés, telle qu'une liste de leurs adresses MAC.

Cette liste peut être stockée localement dans la passerelle, sur un équipement périphérique de son réseau local, ou dans un réseau distant.

Selon un aspect de l'invention, la passerelle est identifiée par un identifiant privé, et la liste d'identifiants de terminaux privilégiés associe les identifiants de terminaux privilégiés à l'identifiant privé de la passerelle.

En associant, dans la liste, les identifiants de terminaux privilégiés à un identifiant privé de la passerelle, c'est-à-dire unique à la passerelle, tel que par exemple une adresse MAC de la passerelle, il est possible de mutualiser le stockage de la liste avec d'autre listes propres à d'autres passerelles, tout en les distinguant. Cela permet de stocker la liste dans un équipement d'un réseau autre que le réseau local, par exemple dans un équipement du réseau public. Grâce à cet aspect, la liste peut être gérée à distance sans passer par la passerelle, par exemple par une interface web sécurisée permettant au gestionnaire du réseau local de la passerelle ou à toute autre personne autorisée, comme par exemple un administrateur du fournisseur d'accès Internet, d'ajouter ou de supprimer des identifiants de terminaux privilégiés en fonction des besoins prévisibles sur une passerelle.

Selon un aspect de l'invention, l'information représentative d'un droit au deuxième type d'accès est obtenue par vérification d'une occurrence, à l'intérieur d'un intervalle de temps prédéterminé, de l'étape de réception de la requête de connexion et d'une détection d'une action prédéterminée d'un utilisateur sur une interface de la passerelle.

Grâce à cet aspect, la passerelle peut obtenir l'information relative au privilège du terminal sans que cette information ait été créée à l'avance. Par exemple, la pression d'un bouton d'appariement sur le boîtier de la passerelle ouvre une période temporelle limitée pendant laquelle sera considéré comme privilégié le premier terminal demandant une connexion à la passerelle. C'est donc la combinaison d'une action physique précise (la pression d'un bouton par une personne) et d'une requête de connexion reçue d'un terminal qui provoque l'attribution d'un droit d'accès privilégié au terminal. L'action physique peut également être toute action, directement sur la passerelle ou sur une interface distante par exemple au travers d'un équipement périphérique du réseau local, pouvant être détectée par la passerelle. La personne effectuant l'action peut être le gestionnaire du réseau local ou toute autre personne ayant physiquement accès à la passerelle ou au réseau local de la passerelle.

Selon un aspect de l'invention, l'étape de détermination de l'existence d'au moins un droit d'accès est suivie d'une étape de mise à jour de ladite liste d'identifiants de terminaux privilégiés, par ajout de l'identifiant du terminal sans fil, en cas d'existence du droit au deuxième type d'accès.

Grâce à cet aspect, la liste de terminaux privilégiés est mise à jour automatiquement, sans qu'il soit nécessaire d'entrer manuellement d'identifiant par une interface quelconque. Après sa déconnexion, lorsque le terminal se connectera à la passerelle une nouvelle fois avec la même requête de connexion, la passerelle obtiendra l'information de privilège sans qu'aucune action ne soit nécessaire de la part de quiconque, et le terminal sera connecté au premier réseau avec un droit d'accès privilégié.

Selon un aspect de l'invention, la requête de connexion comprend un identifiant du terminal sans fil et un identifiant public de la passerelle, et l'étape de détermination comprend une étape de détermination de l'existence d'un droit au premier type d'accès du terminal sans fil en fonction de l'identifiant du terminal et de l'identifiant public de la passerelle, une étape de détermination de l'existence d'un droit au deuxième type d'accès du terminal sans fil en fonction de l'information obtenue, et l'étape de sélection comprend la sélection du deuxième type d'accès en cas d'existence du droit au deuxième type d'accès, et la sélection du premier type d'accès en cas d'existence du droit au premier type d'accès et d'inexistence du droit au deuxième type d'accès.

L'identifiant du terminal est par exemple une adresse MAC, unique au terminal. L'identifiant public de la passerelle est par exemple un SSID commun à d'autres passerelles gérées par le même opérateur, qui est par exemple un fournisseur d'accès Internet offrant un service d'accès à des bornes Wi-Fi, communément appelées des "hotspots Wi-Fi".

L'étape de détermination de l'existence d'un droit au premier type d'accès utilise l'adresse MAC du terminal et le SSID "public" de la passerelle, et permet de connecter le terminal au réseau public avec le type de droit d'accès associé aux "hotspots Wi-Fi" de l'opérateur.

Un tel type de droit d'accès est en général propre à un équipement intermédiaire situé entre la passerelle et le premier réseau, par exemple une plateforme de regroupement du trafic entre le premier réseau et plusieurs passerelles, le trafic étant généré par des terminaux connectés à ces passerelles. Une telle plateforme est gérée par le fournisseur d'accès Internet et est appelée communément une plateforme "hotspot Wi-Fi".

L'étape de détermination de l'existence d'un droit au deuxième type d'accès, quant à elle, utilise une information relative à un privilège, et permet de connecter le terminal au réseau public avec un type de droit d'accès privilégié. Cette information relative à un privilège est par exemple la présence de l'adresse MAC du terminal dans une liste de terminaux privilégiés par la passerelle, ou l'occurrence d'une action spécifique d'une personne sur une interface de la passerelle, telle qu'une pression sur un bouton d'appariement à l'intérieur d'un délai adéquat.

Comme le niveau de QoS associé à une passerelle particulière est supérieur au niveau de QoS associé à une plateforme "hotspot Wi-Fi", un terminal se connectant selon le deuxième type d'accès bénéficie donc d'un niveau de QoS supérieur à celui d'un terminal se connectant selon le premier type d'accès.

Avantageusement, une condition suffisante pour que la connexion au premier réseau se fasse selon le deuxième type d'accès est que le droit du terminal au deuxième type d'accès existe; si cette condition n'est pas remplie, une condition pour que la connexion au premier réseau se fasse selon le premier type d'accès est que le droit du terminal au premier type d'accès existe; enfin, si aucune de ces des deux conditions n'est remplie, la connexion au premier réseau n'est pas faite.

On comprend que grâce à cet aspect, l'invention permet de distinguer plusieurs types de droits d'accès à un premier réseau, sur la base d'une requête de connexion comprenant un identifiant public de passerelle, c'est-à-dire commun à plusieurs passerelles, sans qu'il soit nécessaire que la requête ne comprenne l'identifiant privé de la passerelle, c'est-à-dire unique à la passerelle. L'existence de chacun des différents droits d'accès est déterminée par la passerelle. Par exemple, si le premier réseau est l'Internet, l'invention permet de distinguer:
- les terminaux ordinaires, qui sont autorisés à se connecter à l'Internet à travers une plateforme "hotspot Wi-Fi", avec un niveau de QoS inférieur associé à la plateforme "hotspot Wi-Fi",
- les terminaux privilégiés, qui sont autorisés à se connecter à l'Internet sans passer par une plateforme "hotspot Wi-Fi", avec un niveau de QoS supérieur associé à la passerelle,
- et les terminaux inconnus ou indésirables, qui ne sont pas du tout autorisés à se connecter à l'Internet.

Selon un aspect de l'invention, l'étape de déclenchement comprend en outre le déclenchement d'une connexion du terminal sans fil à un deuxième réseau connecté à la passerelle, en cas d'existence du droit au deuxième type d'accès.

Le deuxième réseau est par exemple le réseau local géré par la passerelle et comprenant des équipements périphériques tels qu'un ordinateur, une imprimante, un récepteur de télévision, un media-center, etc.

Avantageusement, si le terminal détient un droit d'accès privilégié à la passerelle, il obtient également un accès au réseau local de la passerelle et donc aux ressources du réseau local, en plus d'un accès au réseau public avec le niveau de QoS supérieur qui est associé à la passerelle.

L'invention concerne aussi un dispositif de traitement d'une requête de connexion d'un terminal sans fil à un premier réseau par une passerelle offrant un accès audit premier réseau selon au moins un premier et un deuxième types d'accès, selon la revendication 8.

L'invention concerne aussi une passerelle offrant un accès à un premier réseau selon au moins un premier et un deuxième types d'accès et comprenant un point d'accès apte à connecter un terminal sans fil à ladite passerelle, comprenant un dispositif de traitement de requête de connexion du terminal sans fil tel que décrit précédemment.

Une telle passerelle est par exemple une passerelle domestique ou d'entreprise permettant aux équipements d'un réseau local d'accéder à un réseau public, et comprenant un point d'accès Wi-Fi permettant à un terminal sans fil de se connecter à la passerelle et ainsi d'accéder soit au réseau public uniquement, soit à la fois au réseau public et au réseau local.

L'invention concerne aussi un programme d'ordinateur comprenant des instructions de code de programme pour la mise en œuvre des étapes du procédé de traitement d'une requête de connexion tel que décrit précédemment, lorsque le programme est exécuté par un processeur.

L'invention concerne enfin un support d'enregistrement lisible par un équipement passerelle sur lequel est enregistré le programme tel que décrit précédemment.

Ce support est lisible par ordinateur, et peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

### 4. Présentation des figures

D'autres caractéristiques et avantages apparaîtront à la lecture de modes de réalisation décrits en référence aux dessins dans lesquels :
- la figure 1 présente de façon schématique un terminal sans fil, une passerelle, un premier réseau, et un deuxième réseau, selon l'invention,
- la figure 2 présente les étapes du procédé de traitement d'une requête de connexion d'un terminal sans fil à un premier réseau, selon l'invention,
- la figure 3 présente un exemple de mise en œuvre de l'étape de détermination de l'existence d'un droit à un deuxième type d'accès pour le terminal, selon un premier mode de réalisation de l'invention,
- la figure 4 présente un exemple de mise en œuvre de l'étape de détermination de l'existence d'un droit à un deuxième type d'accès pour le terminal, selon un deuxième mode de réalisation de l'invention,
- la figure 5 présente un exemple de structure d'un dispositif de traitement d'une requête de connexion d'un terminal sans fil à un premier réseau, selon l'invention.

### 5. Description détaillée d'au moins un mode de réalisation de l'invention

Dans la suite de la description, on considère des exemples de modes de réalisation de l'invention selon lesquels le terminal communique avec la passerelle par Wi-Fi, c'est-à-dire par un canal de transmission selon les familles de normes IEEE 802.11 et 802.1. L'invention ne se limite pas à ce cas, et s'applique à d'autres types de canaux de transmission tels que le courant porteur en ligne (norme IEEE 1901), ou l'optique sans fil (norme IEEE 802.15.7).

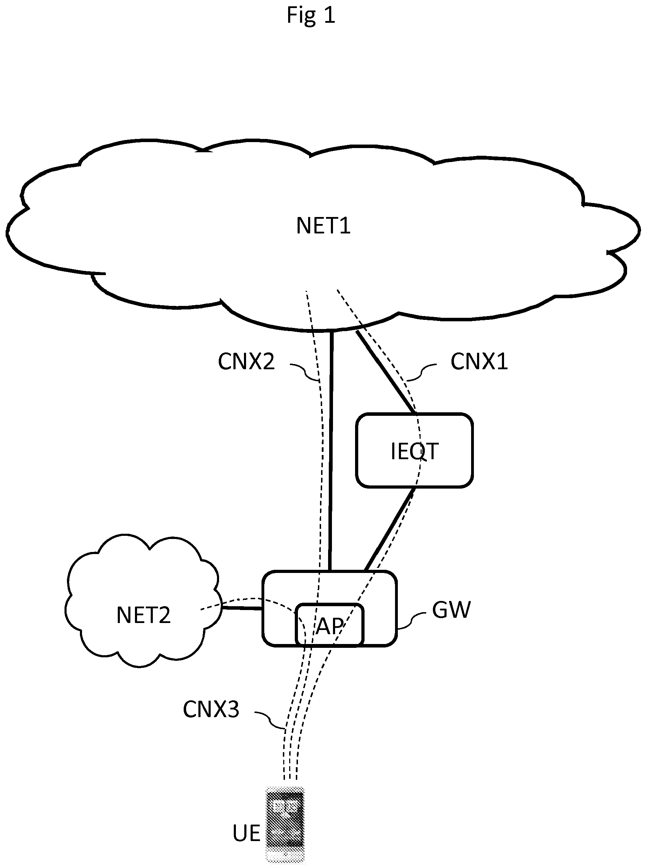

La **figure 1** présente de façon schématique un terminal sans fil, une passerelle, un premier réseau, et un deuxième réseau, selon l'invention.

Le deuxième réseau NET2, par exemple un réseau local domestique ou d'entreprise, est connecté à un premier réseau NET1, par exemple un réseau public tel que le réseau Internet, au moyen d'une passerelle GW. La passerelle GW comprend un point d'accès AP apte à connecter par Wi-Fi un terminal se trouvant dans la zone de couverture de la passerelle.

Le terminal sans fil UE s'attache par Wi-Fi au point d'accès de cette passerelle GW. Selon les droits d'accès attribués à ce terminal UE, il se connecte au premier réseau NET1. Il peut le faire selon deux types de connexion, illustrées sur la figure 1 par les connexions CNX1 et CNX2.

Si le terminal UE possède le droit de se connecter au premier réseau NET1 mais pas de privilège particulier vis-à-vis de la passerelle GW, il est alors connecté par une première connexion CNX1 au premier réseau NET1 au travers d'un équipement intermédiaire IEQT entre la passerelle GW et le premier réseau NET1, avec un niveau de QoS associé à cet équipement IEQT. Cet équipement intermédiaire IEQT est par exemple une plateforme "hotspot Wi-Fi" d'un fournisseur d'accès Internet, dont le rôle est de concentrer le trafic généré par des terminaux connectés par Wi-Fi à des passerelles gérées par ce fournisseur d'accès Internet.

Si le terminal UE possède à la fois le droit de se connecter au premier réseau NET1 et un privilège particulier vis-à-vis de la passerelle GW, ou si ce privilège particulier lui donne automatiquement le droit de se connecter au premier réseau NET1, il est alors connecté par une deuxième connexion CNX2 au premier réseau NET1, avec un niveau de QoS associé à la passerelle GW. L'avantage est que le niveau de QoS accordé aux utilisateurs privilégiés de la passerelle GW est supérieur à celui accordé aux utilisateurs de l'équipement intermédiaire IEQT, pour plusieurs raisons. La première raison est qu'en général un des utilisateurs privilégiés, le gestionnaire de la passerelle par exemple, paie pour obtenir un niveau de QoS supérieur et souhaite en profiter. D'autre part, les utilisateurs privilégiés de la passerelle GW sont moins nombreux et risquent moins de surcharger le premier réseau NET1, que ceux de la plateforme IEQT.

De plus, si le terminal détient le privilège particulier vis-à-vis de la passerelle GW, il peut éventuellement avoir le droit de se connecter par une troisième connexion CNX3 au deuxième réseau NET2, et bénéficier ainsi des ressources du deuxième réseau NET2.

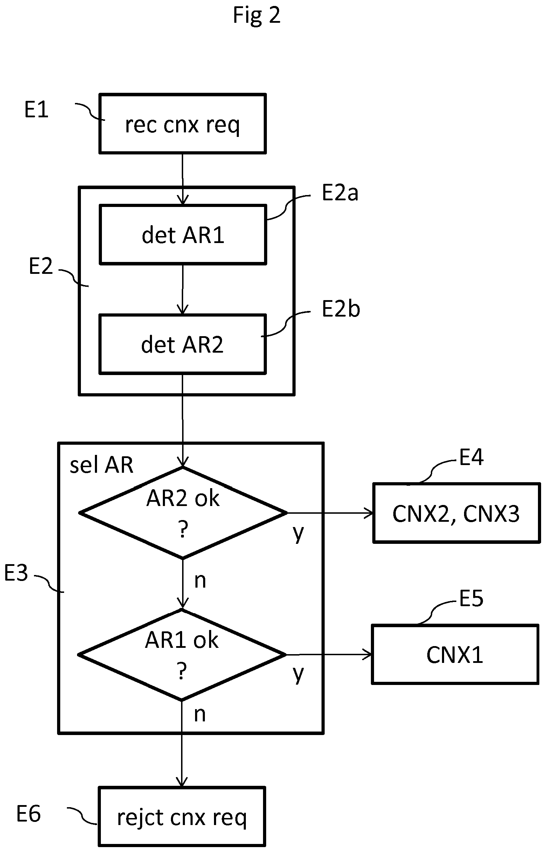

La **figure 2** présente les étapes du procédé de traitement d'une requête de connexion d'un terminal sans fil à un premier réseau, selon l'invention.

Au cours d'une étape préalable, un terminal UE cherchant à se connecter à un premier réseau NET1, tel que par exemple le réseau Internet, détecte la présence d'une passerelle GW apte à établir une connexion avec ce premier réseau NET1. Cette passerelle GW est identifiée par un identifiant public SSID.

Lors de l'étape E1, la passerelle GW reçoit une requête de connexion de la part du terminal UE comprenant l'identifiant public SSID de la passerelle GW ainsi qu'un identifiant MAC_UE du terminal. Cette requête peut par exemple être reçue au travers d'un message de type 802.1x. La norme 802.1x est un protocole d'authentification utilisé par la norme 802.11i WPA2-Enterprise.

Le procédé met ensuite en œuvre une étape E2 de détermination de droits d'accès du terminal au premier réseau NET1. Cette étape E2 comprend des étapes successives E2a et E2b de détermination de l'existence d'un droit d'accès respectivement à un premier type d'accès et à un deuxième type d'accès.

Lors de l'étape E2a de détermination de l'existence d'un droit à un premier type d'accès, la passerelle GW détermine si le terminal UE identifié par son identifiant MAC_UE est autorisé à se connecter à l'aide de l'identifiant public SSID, selon une procédure connue, par exemple en consultant un serveur d'authentification du fournisseur d'accès Internet de la passerelle, tel que prévu par la norme 802.1x.

Si la procédure connue établit que le terminal UE identifié par son identifiant MAC_UE est autorisé à se connecter à l'aide de l'identifiant public SSID, l'étape E2a détermine que le droit au premier type d'accès existe. Sinon, elle détermine qu'il n'existe pas. Dans les deux cas, le procédé passe à l'étape E2b.

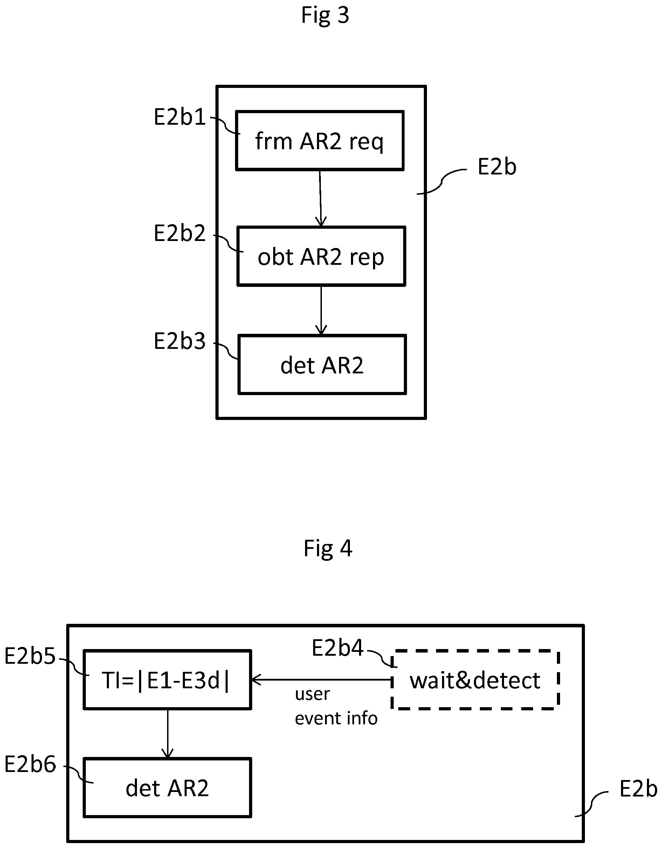

Lors de l'étape E2b de détermination de l'existence d'un droit à un deuxième type d'accès, la passerelle GW détermine si le terminal UE identifié par son identifiant MAC_UE possède ou peut recevoir un droit d'accès privilégié et spécifique à cette passerelle GW particulière. Cette étape E2b de détermination de l'existence d'un tel droit d'accès privilégié du terminal UE peut être effectuée selon plusieurs modes de réalisation qui seront décrits en relation avec les figures 3 et 4.

Si le terminal UE identifié par son identifiant MAC_UE possède un droit d'accès privilégié et spécifique à cette passerelle GW particulière, l'étape E2b détermine que le droit au deuxième type d'accès existe. Sinon, elle détermine qu'il n'existe pas. Dans les deux cas, le procédé passe à l'étape E3.

Lors d'une étape E3 de sélection d'un type d'accès, le procédé sélectionne le type d'accès à attribuer à la connexion au premier réseau NET1 demandée par le terminal UE. Plusieurs cas se présentent:
- si le deuxième droit d'accès existe pour le terminal UE, le procédé passe à l'étape E4,
- si le deuxième droit d'accès n'existe pas pour le terminal UE, mais le premier droit d'accès existe pour le terminal UE, le procédé passe à l'étape E5,
- si ni le deuxième droit d'accès ni le premier droit d'accès n'existent pour le terminal UE, le procédé passe à l'étape E6.

Lors de l'étape E4, la passerelle GW déclenche l'établissement d'une deuxième connexion CNX2 entre le terminal UE et le premier réseau NET1, par exemple le réseau Internet, avec le niveau de QoS accordé aux utilisateurs privilégiés de la passerelle GW.

Avantageusement, lors de cette étape E4, la passerelle GW peut également déclencher l'établissement d'une troisième connexion CNX3 entre le terminal UE et un deuxième réseau NET2 connecté à la passerelle GW, tel que par exemple le réseau local géré par la passerelle GW. En plus de bénéficier d'un niveau de QoS supérieur, le terminal bénéficie alors d'un accès aux ressources du réseau local, telles que par exemple une imprimante, un centre multimédia, etc.

Lors de l'étape E5, la passerelle GW déclenche l'établissement d'une première connexion CNX1 entre le terminal UE et le premier réseau NET1, par exemple le réseau Internet, mais au travers d'un équipement intermédiaire entre la passerelle GW et le premier réseau, tel que par exemple une plateforme "hotspot Wi-Fi" du fournisseur d'accès Internet, regroupant les connexions de plusieurs de ses bornes Wi-Fi. Cette connexion CNX1 bénéficie d'un niveau de QoS propre à l'équipement intermédiaire IEQT, c'est-à-dire propre à la plateforme "hotspot Wi-Fi" du fournisseur d'accès Internet. Ce niveau de QoS est en général inférieur à celui accordé aux utilisateurs pivilégiés de la passerelle GW.

Il est à noter que chez certains opérateurs, l'équipement intermédiaire peut être émulé par la passerelle, en étant mis en œuvre dans la passerelle.

Lors de l'étape E6, la requête de connexion est refusée.

Il est important de noter que les étapes E4, E5 et E6 sont mutuellement exclusives, et en particulier, que la première connexion CNX1 et la deuxième connexion CNX2 sont mutuellement exclusives pour un même terminal.

La **figure 3** présente un exemple de mise en œuvre de l'étape de détermination de l'existence d'un droit à un deuxième type d'accès pour le terminal, selon un premier mode de réalisation de l'invention.

Dans ce mode de réalisation, la passerelle GW consulte une liste LTP d'identifiants de terminaux privilégiés par la passerelle GW. Cette liste LTP peut être regroupée dans une plus grande liste LTPg, avec d'autres listes d'identifiants de terminaux privilégiés par d'autres passerelles. La liste LTPg peut être hébergée par un équipement distant EQD.

Dans ce mode de réalisation, l'étape E2b présentée en relation avec la figure 2 comprend les étapes successives E2b1, E2b2 et E2b3.

Lors d'une étape E2b1, la passerelle GW formule une requête d'interrogation de liste à l'équipement distant EQD hébergeant la liste LTP, comprenant l'identifiant du terminal MAC_UE et un identifiant privé de la passerelle GW, MAC_AP. Cet identifiant MAC_AP est unique à la passerelle GW, et est par exemple une adresse de type MAC.

Lors d'une étape E2b2, la passerelle GW obtient une réponse de l'équipement distant EQD.

Lors d'une étape E2b3 de détermination de l'existence d'un droit au deuxième type d'accès pour le terminal UE, la passerelle GW vérifie si la réponse obtenue lors de l'étape E2b2 indique que l'identifiant MAC_UE est présent dans la liste LTP. Si c'est le cas, c'est que le terminal UE identifié par son identifiant MAC_UE possède un droit d'accès privilégié et spécifique à cette passerelle GW particulière, et donc que le droit au deuxième type d'accès existe. Sinon, il n'existe pas. Dans les deux cas, le procédé passe à l'étape E3.

Dans une variante de ce mode de réalisation décrit en relation avec la figure 3, la liste LTP d'identifiants de terminaux privilégiés par la passerelle GW est hébergée localement par la passerelle GW. Les étapes E2b1 et E2b2 sont regroupées en une seule étape, où la passerelle GW obtient réponse à sa requête d'interrogation de liste en consultant localement sa liste LTP.

La **figure 4** présente un exemple de mise en œuvre de l'étape de détermination de l'existence d'un droit à un deuxième type d'accès pour le terminal, selon un deuxième mode de réalisation de l'invention.

Dans ce mode de réalisation, la passerelle GW enregistre le moment TR auquel intervient la réception de la requête de connexion de l'étape E1.

L'étape E2b présentée en relation avec la figure 2 comprend dans ce mode de réalisation les étapes E2b4, E2b5 et E2b6.

Lors d'une étape E2b4 d'attente, la passerelle GW détecte une information relative à une action prédéterminée d'un utilisateur sur une interface la passerelle GW. L'action peut par exemple être la pression sur un bouton se trouvant sur le boîtier de la passerelle GW. La passerelle GW enregistre le moment TU auquel intervient l'obtention de l'information relative à l'action de l'utilisateur.

Lors d'une étape E2b5, la passerelle GW obtient l'information relative à une action prédéterminée d'un utilisateur sur une interface la passerelle, par exemple sous la forme d'un message comprenant un paramètre dont la valeur est TU, et calcule l'intervalle de temps TI s'étant écoulé entre les moments TR et TU, si TR est antérieur à TU, ou entre les moments TU et TR, si TU est antérieur à TR.

On comprend que l'action prédéterminée d'un utilisateur sur une interface la passerelle peut aussi bien intervenir avant qu'après l'étape E1.

Lors d'une étape E2b6 faisant suite à l'étape E2b5, la passerelle GW détermine si un droit au deuxième type d'accès existe pour le terminal UE. Si l'intervalle TI est inférieur ou égal à un seuil S prédéterminé, c'est que le terminal UE doit recevoir un droit d'accès privilégié et spécifique à cette passerelle GW particulière, et donc que le droit au deuxième type d'accès existe. Sinon, c'est-à-dire si l'intervalle TI est supérieur au seuil S, le droit au deuxième type d'accès n'existe pas. Dans les deux cas, le procédé passe à l'étape E3.

On comprend que si l'un des deux événements, que sont d'une part la réception de la requête de connexion et d'autre part l'action de l'utilisateur sur une interface la passerelle, est survenu mais pas l'autre, la valeur de l'intervalle TI augmente avec l'attente de celui des deux événements qui n'est pas encore survenu. Dès que l'intervalle TI dépasse le seuil S, l'attente cesse et le procédé passe à l'étape E3 en ayant établi que le deuxième droit d'accès n'existe pas.

Ce mode de réalisation permet par exemple l'usage d'un bouton d'appariement dans le cas où le gestionnaire de la passerelle GW estime que le terminal UE doit bénéficier d'un accès privilégié, sans être pour autant répertorié dans la liste des terminaux privilégiés. Ce peut être par exemple parce que ce terminal se connecte pour la première fois à cette passerelle. Le recours à un tel bouton d'appariement est plus rapide et évite le recours à une procédure fastidieuse d'entrée manuelle d'un identifiant du terminal sur une interface de gestion de la passerelle.

Les deux modes de réalisation de l'étape E2b qui viennent d'être présentés peuvent être combinés dans des variantes.

Par exemple, dans un troisième mode de réalisation (non illustré) de l'étape E2b, l'étape E2b3 est suivie de l'étape E2b4 au lieu de l'étape E3, si l'identifiant MAC_UE n'est pas présent dans la liste LTP. Ainsi, il est encore possible de permettre à la passerelle GW d'accorder un droit d'accès privilégié au terminal UE, à l'aide du bouton d'appariement, lorsque son identifiant MAC_UE n'est pas présent dans la liste LTP.

Dans une variante avantageuse (non illustrée) combinant des caractéristiques des deuxième et troisième modes décrits ci-dessus, l'étape E3 est suivie d'une étape E7 (non illustrée) en plus de l'étape E4, s'il est déterminé lors de l'étape E2b6 que le droit au deuxième type d'accès existe. Lors de cette étape E7, la liste LTP est mise à jour automatiquement avec l'identifiant MAC_UE, sans qu'il soit nécessaire de le rentrer manuellement dans la liste LTP. Ainsi, les prochaines fois que la passerelle GW reçoit une requête de connexion de la part du terminal UE, la consultation locale ou l'interrogation à distance de la liste LTP suffit pour que le droit d'accès privilégié soit accordé au terminal UE par la passerelle GW, sans qu'il soit nécessaire d'appuyer sur le bouton d'appariement.

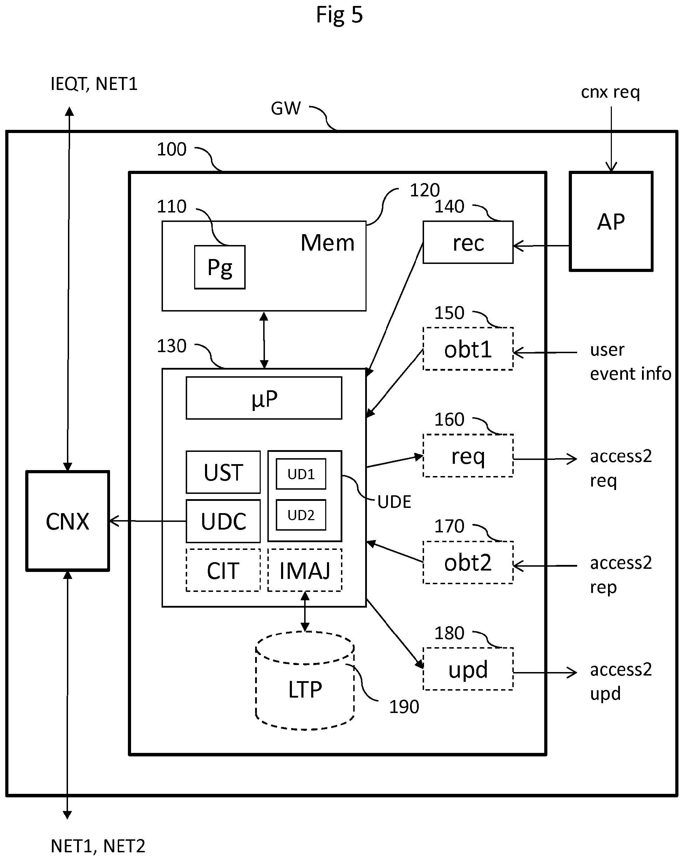

En relation avec la **figure 5****,** on présente maintenant un exemple de structure d'un dispositif de traitement d'une requête de connexion d'un terminal sans fil à un premier réseau, selon un aspect de l'invention.

Le dispositif 100 de traitement d'une requête de connexion d'un terminal sans fil à un premier réseau met en œuvre le procédé de traitement d'une requête de connexion d'un terminal sans fil à un premier réseau tel que décrit ci-dessus.

Un tel dispositif 100 peut être intégré dans une passerelle domestique ou d'entreprise, ladite passerelle comprenant un point d'accès AP.

Par exemple, le dispositif 100 comprend une unité de traitement 130, équipée par exemple d'un microprocesseur µP, et pilotée par un programme d'ordinateur 110, stocké dans une mémoire 120 et mettant en œuvre le procédé de traitement d'une requête de connexion d'un terminal sans fil à un point d'accès selon l'invention. A l'initialisation, les instructions de code du programme d'ordinateur 110 sont par exemple chargées dans une mémoire RAM, avant d'être exécutées par le processeur de l'unité de traitement 130.

Un tel dispositif 100 comprend un module de réception 140, apte à recevoir une requête de connexion d'un terminal sans fil (cnx req) reçue par le point d'accès AP de la passerelle GW.

L'unité de traitement 130 comprend:
- une unité UDE de détermination de l'existence d'au moins un droit d'accès à un premier réseau NET1 pour le terminal sans fil,
- une unité UST de sélection d'un type d'accès en fonction des droits d'accès déterminés pour le terminal,
- une unité UDC de déclenchement d'une connexion du terminal sans fil au premier réseau NET1, avec le type d'accès sélectionné.

L'unité UDE comprend:
- une unité UD1 de détermination de l'existence d'un droit à un premier type d'accès à un premier réseau NET1 pour le terminal sans fil,
- une unité UD2 de détermination de l'existence d'un droit à un deuxième type d'accès à un premier réseau NET1 pour le terminal sans fil,

L'unité UDC du dispositif 100 émet une commande de déclenchement d'une connexion vers une unité de connexion CNX de la passerelle GW, apte à connecter le terminal sans fil au premier réseau NET1 au travers d'un équipement intermédiaire IEQT, ou au premier réseau NET1 sans passer par l'équipement intermédiaire IEQT. L'unité de connexion CNX est également apte à connecter le terminal sans fil au deuxième réseau NET2.

Avantageusement, un tel dispositif 100 peut comprendre en outre :
- un module d'obtention 150, apte à obtenir une information relative à un événement utilisateur (user event),
- un module de formulation 160, apte à formuler une requête d'interrogation d'une liste (access2 req) d'identifiants de terminaux et de points d'accès,
- un module d'obtention 170, apte à recevoir une réponse à une requête d'interrogation d'une liste (access2 rep) d'identifiants de terminaux et de points d'accès,
- un module d'émission 180, apte à transmettre une requête de mise à jour d'une liste (access2 upd) d'identifiants de terminaux et de points d'accès.

Avantageusement, l'unité de traitement 130 peut comprendre en outre:
- une unité CIT de calcul d'un intervalle de temps entre le moment de la réception d'une requête de connexion d'un terminal sans fil à un point d'accès et le moment de l'obtention d'une information relative à un événement utilisateur,
- une unité IMAJ d'interrogation et de mise à jour d'une liste 190 d'identifiants de terminal, si cette liste 190 est mise en œuvre par le dispositif 100.

La liste 190 peut être stockée dans la mémoire 120 ou séparément.

Les exemples de réalisation de l'invention qui viennent d'être présentés ne sont que quelques uns des modes de réalisation envisageables. Ils montrent que l'invention permet à un terminal sans fil de se connecter à un réseau public tel que l'Internet, au travers du réseau local desservi par une passerelle comprenant un point d'accès sans fil, et ainsi bénéficier de la QoS supérieure associée au réseau local, même dans les cas où le terminal ne connait qu'un identifiant public commun à plusieurs passerelles, et ne connait pas l'identifiant privé unique propre à la passerelle, ou ne possède pas à l'avance de droit d'accès à la passerelle.

## Revendications

1. **Procédé de traitement d'une requête de connexion** d'un terminal sans fil (UE) à un premier réseau (NET1) par une passerelle (GW) offrant un accès audit premier réseau (NET1) selon au moins un premier et un deuxième types d'accès, le premier type d'accès étant associé à un identifiant commun à plusieurs passerelles, dit identifiant public, le procédé étant effectué par la passerelle et **caractérisé en ce que** le deuxième type d'accès est spécifique à la passerelle et le procédé comprend les étapes suivantes:
• une étape (E1) de réception d'une requête de connexion comprenant l'identifiant public et un identifiant du terminal sans fil (UE), et ne comprenant pas d'identifiant privé unique à la passerelle, en provenance du terminal sans fil (UE),
• une étape (E2a) de détermination de l'existence d'au moins un droit au premier type d'accès du terminal sans fil (UE) audit premier réseau (NET1), sur la base d'une information obtenue par consultation d'un serveur d'authentification,
le procédé comprenant en outre les étapes suivantes:
• une étape (E2b) de détermination de l'existence d'un droit au deuxième type d'accès du terminal sans fil (UE) audit premier réseau (NET1), sur la base d'une information relative à un droit d'accès privilégié à la passerelle attribuable au terminal,
• une étape (E3) de sélection d'un type d'accès parmi les au moins premier et deuxième types d'accès en fonction dudit au moins un droit déterminé,
• une étape (E4, E5) de déclenchement de la connexion du terminal sans fil (UE) audit premier réseau (NET1) selon le type d'accès sélectionné.

2. **Procédé de traitement d'une requête de connexion** selon la revendication 1, où l'information représentative d'un droit au deuxième type d'accès est obtenue par consultation d'une liste d'identifiants de terminaux privilégiés.

3. **Procédé de traitement d'une requête de connexion** selon la revendication 2, où la passerelle est identifiée par un identifiant privé, et en ce que la liste d'identifiants de terminaux privilégiés associe les identifiants de terminaux privilégiés à l'identifiant privé de la passerelle (GW).

4. **Procédé de traitement d'une requête de connexion** selon la revendication 1, où l'information représentative d'un droit au deuxième type d'accès est obtenue par vérification d'une occurrence, à l'intérieur d'un intervalle de temps prédéterminé, de l'étape (E1) de réception de la requête de connexion et d'une détection d'une action prédéterminée d'un utilisateur sur une interface de la passerelle (GW).

5. **Procédé de traitement d'une requête de connexion** selon la revendication 4, où l'étape de détermination de l'existence d'un droit est suivie d'une étape de mise à jour d'une liste d'identifiants de terminaux privilégiés, par ajout de l'identifiant du terminal sans fil (UE), en cas d'existence du droit au deuxième type d'accès.

6. **Procédé de traitement d'une requête de connexion** selon la revendication 1, où la requête de connexion comprend un identifiant du terminal sans fil (UE) et un identifiant public de la passerelle (GW), et où l'étape (E2) de détermination comprend une étape (E2a) de détermination de l'existence d'un droit au premier type d'accès du terminal sans fil (UE) en fonction de l'identifiant du terminal (UE) et de l'identifiant public de la passerelle (GW), une étape (E2b) de détermination de l'existence d'un droit au deuxième type d'accès du terminal sans fil (UE) en fonction de l'information obtenue, et où l'étape (E3) de sélection comprend la sélection du deuxième type d'accès en cas d'existence du droit au deuxième type d'accès, et la sélection du premier type d'accès en cas d'existence du droit au premier type d'accès et d'inexistence du droit au deuxième type d'accès.

7. **Procédé de traitement d'une requête de connexion** selon la revendication 6, où l'étape (E4) de déclenchement comprend en outre le déclenchement d'une connexion du terminal sans fil (UE) à un deuxième réseau (NET2) connecté à la passerelle (GW), en cas d'existence du droit au deuxième type d'accès.

8. **Dispositif de traitement d'une requête de connexion** d'un terminal sans fil (UE) à un premier réseau (NET1) par une passerelle (GW) offrant un accès audit premier réseau (NET1) selon au moins un premier et un deuxième types d'accès, le premier type d'accès étant associé à un identifiant commun à plusieurs passerelles, dit identifiant public, le dispositif étant **caractérisé en ce que** le deuxième type d'accès est spécifique à la passerelle et le dispositif comprend des modules adaptés respectivement pour
• la réception (140) d'une requête de connexion comprenant l'identifiant public et un identifiant du terminal sans fil (UE), et ne comprenant pas d'identifiant privé unique à la passerelle, en provenance du terminal sans fil (UE),
• la détermination (UD1) de l'existence d'au moins un droit au premier type d'accès du terminal sans fil (UE) audit premier réseau (NET1), sur la base d'une information obtenue par consultation d'un serveur d'authentification,
• la détermination (UD2) de l'existence d'un droit à un deuxième type d'accès du terminal sans fil (UE) audit premier réseau (NET1), sur la base d'une information relative à un droit d'accès privilégié à la passerelle attribuable au terminal,
• la sélection (UST) d'un type d'accès parmi au moins un premier et deuxième types d'accès en fonction dudit au moins un droit déterminé, et pour
• le déclenchement (UDC) de la connexion du terminal sans fil (UE) audit premier réseau (NET1) selon le type d'accès sélectionné.

9. **Passerelle** offrant un accès à un premier réseau (NET1) selon au moins un premier et un deuxième types d'accès et comprenant un point d'accès apte à connecter un terminal sans fil (UE) à ladite passerelle, **caractérisée en ce qu'elle** comprend un dispositif de traitement de requête de connexion du terminal sans fil selon la revendication 8.

10. **Programme d'ordinateur** comprenant des instructions de code de programme pour la mise en œuvre des étapes du procédé de traitement d'une requête de connexion selon l'une des revendications 1 à 7 lorsque le programme est exécuté par un processeur d'une passerelle.

11. **Support d'enregistrement** lisible par un équipement passerelle sur lequel est enregistré le programme selon la revendication 10.

## Patentansprüche

1. Verfahren zum Verarbeiten einer Verbindungsanfrage von einem drahtlosen Endgerät (UE) an ein erstes Netzwerk (NET1) über ein Gateway (GW), das einen Zugang zu dem ersten Netzwerk (NET1) gemäß mindestens einem ersten und einem zweiten Zugangstyp bietet, wobei der erste Zugangstyp einer für mehrere Gateways gemeinsamen Kennung, genannt öffentliche Kennung, zugeordnet ist, wobei das Verfahren von dem Gateway ausgeführt wird und **dadurch gekennzeichnet ist, dass** der zweite Zugangstyp spezifisch für das Gateway ist und das Verfahren die folgenden Schritte umfasst:
• einen Schritt (E1) zum Empfangen einer Verbindungsanfrage von dem drahtlosen Endgerät (UE), die die öffentliche Kennung und eine Kennung des drahtlosen Endgeräts (UE) umfasst und keine private Kennung umfasst, die für das Gateway eindeutig ist,
• einen Schritt (E2a) zum Bestimmen des Vorhandenseins von mindestens einem Recht auf den ersten Zugangstyp des drahtlosen Endgeräts (UE) für das erste Netzwerk (NET1) auf der Grundlage einer Information, die durch Abfragen eines Authentifizierungsservers erhalten wird,
das Verfahren umfasst darüber hinaus die folgenden Schritte:
• einen Schritt (E2b) zum Bestimmen des Vorhandenseins eines Rechts auf den zweiten Zugangstyp des drahtlosen Endgeräts (UE) für das erste Netzwerk (NET1) auf der Grundlage einer Information bezüglich eines privilegierten Zugangsrechts auf das Gateway, das dem Endgerät zuzuordnen ist,
• einen Schritt (E3) zum Auswählen eines Zugangstyps unter dem mindestens ersten und zweiten Zugangstyp in Abhängigkeit von mindestens einem festgelegten Recht,
• einen Schritt (E4, E5) zum Auslösen der Verbindung des drahtlosen Endgeräts (UE) zum ersten Netzwerk (NET1) gemäß dem gewählten Zugangstyp.

2. Verfahren zum Verarbeiten einer Verbindungsanfrage nach Anspruch 1, wobei die repräsentative Information eines Rechts auf den zweiten Zugangstyp durch Abfragen einer Liste mit Kennungen von privilegierten Endgeräten erhalten wird.

3. Verfahren zum Verarbeiten einer Verbindungsanfrage nach Anspruch 2, wobei der Gateway über eine private Kennung identifiziert wird, und wobei die Liste mit Kennungen von privilegierten Endgeräten die Kennungen von privilegierten Endgeräten der privaten Kennung des Gateways (GW) zuordnet.

4. Verfahren zum Verarbeiten einer Verbindungsanfrage nach Anspruch 1, wobei die repräsentative Information eines Rechts auf den zweiten Zugangstyp durch Prüfen eines Vorkommens, innerhalb eines vorbestimmten Zeitintervalls, des Schritts (E1) zum Empfangen der Verbindungsanfrage und einer Erkennung einer vorbestimmten Aktion eines Benutzers an einer Schnittstelle des Gateways (GW) erhalten wird.

5. Verfahren zum Verarbeiten einer Verbindungsanfrage nach Anspruch 4, wobei der Schritt zum Bestimmen des Vorhandenseins eines Rechts gefolgt wird von einem Schritt zum Aktualisieren einer Liste mit Kennungen von privilegierten Endgeräten, durch Hinzufügen der Kennung des drahtlosen Endgeräts (UE) im Fall des Vorhandenseins des Rechts auf den zweiten Zugangstyp.

6. Verfahren zum Verarbeiten einer Verbindungsanfrage nach Anspruch 1, wobei die Verbindungsanfrage eine Kennung des drahtlosen Endgeräts (UE) und eine öffentliche Kennung des Gateways (GW) umfasst, und wobei der Schritt (E2) zum Bestimmen einen Schritt (E2a) zum Bestimmen des Vorhandenseins eines Rechts auf den ersten Zugangstyp des drahtlosen Endgeräts (UE) in Abhängigkeit von der Kennung des Endgeräts (UE) und der öffentlichen Kennung des Gateways (GW) hat, einen Schritt (E2b) zum Bestimmen des Vorhandenseins eines Rechts auf den zweiten Zugangstyp des drahtlosen Endgeräts (UE) in Abhängigkeit von der erhaltenen Information hat, und wobei der Schritt (E3) zum Auswählen die Auswahl des zweiten Zugangstyps im Fall des Vorhandenseins des Rechts auf den zweiten Zugangstyp und die Auswahl des ersten Zugangstyps im Fall des Vorhandenseins des Rechts auf den ersten Zugangstyp und des Nichtvorhandenseins des Rechts auf den zweiten Zugangstyp umfasst.

7. Verfahren zum Verarbeiten einer Verbindungsanfrage nach Anspruch 6, wobei der Schritt (E4) zum Auslösen darüber hinaus das Auslösen einer Verbindung des drahtlosen Endgeräts (UE) zu einem zweiten Netzwerk (NET2), verbunden mit dem Gateway (GW), im Fall des Vorhandenseins des Rechts auf den zweiten Zugangstyp umfasst.

8. Vorrichtung zum Verarbeiten einer Verbindungsanfrage von einem drahtlosen Endgerät (UE) an ein erstes Netzwerk (NET1) über ein Gateway (GW), das einen Zugang zu dem ersten Netzwerk (NET1) gemäß mindestens einem ersten und einem zweiten Zugangstyp bietet, wobei der erste Zugangstyp einer für mehrere Gateways gemeinsamen Kennung, genannt öffentliche Kennung, zugeordnet ist, wobei die Vorrichtung **dadurch gekennzeichnet ist, dass** der zweite Zugangstyp spezifisch für das Gateway ist und die Vorrichtung die folgenden entsprechend angepassten Module umfasst zum
• Empfangen (140) einer Verbindungsanfrage von dem drahtlosen Endgerät (UE), die die öffentliche Kennung und eine Kennung des drahtlosen Endgeräts (UE) umfasst und keine private Kennung umfasst, die für das Gateway eindeutig ist,
• zum Bestimmen (UD1) des Vorhandenseins von mindestens einem Recht auf den ersten Zugangstyp des drahtlosen Endgeräts (UE) für das erste Netzwerk (NET1) auf der Grundlage einer Information, die durch Abfragen eines Authentifizierungsservers erhalten wird,
• zum Bestimmen (UD2) des Vorhandenseins eines Rechts auf den zweiten Zugangstyp des drahtlosen Endgeräts (UE) für das erste Netzwerk (NET1) auf der Grundlage einer Information bezüglich eines privilegierten Zugangsrechts auf das Gateway, das dem Endgerät zuzuordnen ist,
• zum Auswählen (UST) eines Zugangstyps unter dem mindestens ersten und zweiten Zugangstyp in Abhängigkeit vom mindestens einem festgelegten Recht, und zum
• Auslösen (UDC) der Verbindung des drahtlosen Endgeräts (UE) zum ersten Netzwerk (NET1) gemäß dem gewählten Zugangstyp.

9. Gateway, das einen Zugang zu einem ersten Netzwerk (NET1) gemäß mindestens einem ersten und einem zweiten Zugangstyp bietet und einen Zugangspunkt umfasst, der ein drahtloses Endgerät (UE) mit dem Gateway verbinden kann, **dadurch gekennzeichnet, dass** er eine Vorrichtung zum Verarbeiten der Verbindungsanfrage des drahtlosen Endgeräts nach Anspruch 8 umfasst.

10. Computerprogramm mit Programmcode-Anweisungen zum Umsetzen der Schritte des Verfahrens zum Verarbeiten einer Verbindungsanfrage nach einem der Ansprüche 1 bis 7, wenn das Programm von einem Prozessor eines Gateway-Geräts ausgeführt wird.

11. Speichermedium, das von einem Gateway-Gerät gelesen werden kann, auf dem das Programm nach Anspruch 10 gespeichert ist.

## Claims

1. **Method of processing a request for connection** of a wireless terminal (UE) to a first network (NET1) by a gateway (GW) offering access to said first network (NET1) according to at least a first and a second type of access, the first type of access being associated with an identifier common to several gateways, termed public identifier, the method being performed by the gateway and **characterized in that** the second type of access is specific to the gateway and the method comprises the following steps:
• a step (E1) of receiving a connection request comprising the public identifier and an identifier of the wireless terminal (UE), and not comprising a private identifier unique to the gateway, originating from the wireless terminal (UE),
• a step (E2a) of determining the existence of at least one right to the first type of access of the wireless terminal (UE) to said first network (NET1), on the basis of an information item obtained by consulting an authentication server,
the method further comprising the following steps:
• a step (E2b) of determining the existence of a right to the second type of access of the wireless terminal (UE) to said first network (NET1), on the basis of an information item relating to a privileged right of access to the gateway allocatable to the terminal,
• a step (E3) of selecting a type of access from among the at least first and second types of access as a function of said at least one right determined,
• a step (E4, E5) of triggering the connection of the wireless terminal (UE) to said first network (NET1) according to the type of access selected.

2. **Method of processing a request for connection** according to Claim 1, **where** the information item representative of a right to the second type of access is obtained by consulting a list of identifiers of privileged terminals.

3. **Method of processing a request for connection** according to Claim 2, **where** the gateway is identified by a private identifier, and where the list of identifiers of privileged terminals associates the identifiers of privileged terminals with the private identifier of the gateway (GW).

4. **Method of processing a request for connection** according to Claim 1, **where** the information item representative of a right to the second type of access is obtained by verification of an occurrence, inside a predetermined time interval, of step (E1) of receiving the connection request and of a detection of a predetermined action of a user on an interface of the gateway (GW).

5. **Method of processing a request for connection** according to the Claim 4, **where** the step of determining the existence of at least one right is followed by a step of updating a list of identifiers of privileged terminals, by adding the identifier of the wireless terminal (UE), in case of existence of the right to the second type of access.

6. **Method of processing a request for connection** according to Claim 1, **where** the connection request comprises an identifier of the wireless terminal (UE) and a public identifier of the gateway (GW), and **where** step (E2) of determining comprises a step (E2a) of determining the existence of a right to the first type of access of the wireless terminal (UE) as a function of the identifier of the terminal (UE) and of the public identifier of the gateway (GW), a step (E2b) of determining the existence of a right to the second type of access of the wireless terminal (UE) as a function of the information item obtained, and **where** step (E3) of selecting comprises the selection of the second type of access in case of existence of the right to the second type of access, and the selection of the first type of access in case of existence of the right to the first type of access and of inexistence of the right to the second type of access.

7. **Method of processing a request for connection** according to Claim 6, **where** step (E4) of triggering further comprises the triggering of a connection of the wireless terminal (UE) to a second network (NET2) connected to the gateway (GW), in case of existence of the right to the second type of access.

8. **Device for processing a request for connection** of a wireless terminal (UE) to a first network (NET1) by a gateway (GW) offering access to said first network (NET1) according to at least a first and a second type of access, the first type of access being associated with an identifier common to several gateways, termed public identifier, the device being **characterized in that** the second type of access is specific to the gateway and the device comprises modules adapted respectively for the
• reception (140) of a connection request comprising the public identifier and an identifier of the wireless terminal (UE), and not comprising a private identifier unique to the gateway, originating from the wireless terminal (UE),
• determination (UD1) of the existence of at least one right to the first type of access of the wireless terminal (UE) to said first network (NET1), on the basis of an information item obtained by consulting an authentication server,
• determination (UD2) of the existence of a right to a second type of access of the wireless terminal (UE) to said first network (NET1), on the basis of an information item relating to a privileged right of access to the gateway allocatable to the terminal,
• selection (UST) of a type of access from among at least a first and second type of access as a function of said at least one right determined, and for the
• triggering (UDC) of the connection of the wireless terminal (UE) to said first network (NET1) according to the type of access selected.

9. **Gateway** offering access to a first network (NET1) according to at least a first and a second type of access and comprising an access point able to connect a wireless terminal (UE) to said gateway, **characterized in that** it comprises a device for processing a request for connection of the wireless terminal according to Claim 8.

10. **Computer program** comprising program code instructions for the implementation of the steps of the method of processing a request for connection according to one of Claims 1 to 7 when the program is executed by a processor of a gateway.

11. **Recording medium** readable by a gateway equipment item on which the program according to Claim 10 is recorded.
